# EUROPEAN PATENT SPECIFICATION

(11) **EP 3 838 598 B1**
(45) Date of publication and mention of the grant of the patent: **14.09.2022**
(21) Application number: 19217833.3
(22) Date of filing: 19.12.2019
(51) Int. Cl.: H04N 1/00, H04N 1/23, B41J 2/045, B41J 11/00, B41J 2/21

(54) **METHOD AND APPARATUS FOR PREVENTING EJECTION FAILURES CAUSED BY MEDIA DEFORMATIONS**
VERFAHREN UND VORRICHTUNG ZUR VERHINDERUNG VON DURCH MEDIENDEFORMATIONEN VERURSACHTEN AUSWURFSTÖRUNGEN
PROCÉDÉ ET APPAREIL POUR EMPÊCHER LES DÉFAUTS D'ÉJECTION PROVOQUÉS PAR DES DÉFORMATIONS DE SUPPORT

(43) Date of publication of application: 23.06.2021
(73) Proprietor: Canon Production Printing Holding B.V., 5914 HH Venlo (NL)
(72) Inventor: WIJNHEIJMER, Albertine P., 5914 HH Venlo (NL); VAN ACQUOIJ, Catharinus, 5914 HH Venlo (NL)
(74) Representative: Canon Production Printing IP Department

(56) References cited:
- WO-A1-2018/065382
- US-A1- 2011 279 507
- US-A1- 2013 141 484
- US-A1- 2016 103 633

## Description

### FIELD OF THE INVENTION

The present invention generally relates to an ink jet printer. Further, the present invention relates to a method and apparatus for preventing ejection failures caused by media deformations.

### BACKGROUND OF THE INVENTION

Known inkjet printers comprise a print head which in turn comprises a plurality of printing elements, each of which being arranged to eject a droplet of a liquid, for example ink, through said printing element. In these devices, each printing element is associated a print location, e.g. a pixel. Example inkjet printing devices are known from US 2013/141484 A1 and WO 2018/065382 A1.

It is a well-known problem in inkjet printing that deformations may be present in the media, e.g. paper, that are used to print on. As the media has to pass a very narrow print gap to obtain a good print quality, the deformed areas of the medium that is transported through the print gap may touch the nozzle plates of the print heads. This affects particularly those inkjet printers that lack a mechanism for discarding deforming media before it must travel below one or more print heads. Said touch can contaminate the nozzle plate and/or disturb one or more nozzles of a print head, which will lead to print quality artefacts like streakiness. When left undetected these print quality artefacts can lead to significant waste because the printer output has to be rejected due to print quality problems.

For this reasons, inkjet printers usually incorporate a sentry sensor configured to reject media containing deformations. Said sensor is usually configured such that it is more likely to reject media with deformations that would not have led to an impact against the print heads than to let media with deformations that would have led to an impact pass under the print heads.

In order to solve the aforementioned problems, an alternative method for handling deformed media is needed, which reduces the number of times printed media needs to be discarded due to the presence of image artifacts caused by the deformations in the media.

It is an object of the invention to provide an inkjet printing device and method which overcome the previously described deficiencies of the prior art.

### SUMMARY OF THE INVENTION

In an aspect of the present invention, a method of controlling an inkjet printing device according to claim 1 is provided. In the method of controlling an inkjet printing device of the present invention an inkjet printing device comprises one or more print heads each print head comprising a plurality of nozzles, a sensor for detecting printing media deformations located such that printing media travels under said sensor before travelling under the one or more print heads, and a scanner located such that printing media travels under said scanner after travelling under the one or more print heads.

The method of the present invention comprises a step of detecting media deformations using the sensor.

If deformations are detected in the printing media in the previous step, the method of the present invention comprises inhibiting printing. This step allows avoiding printing in deformed media, which potentially leads to ejection failures during subsequent printing operations. Further, re-arranging the queue of printing jobs allows continuing the printing of a particular print job while avoiding missing prints due to the appearance of deformed media.

If printing is inhibited in the previous step, which means that media with a deformation has been detected before it enters the gap between the printing surface and the one or more print heads, the method of the present invention comprises sensing a pressure wave in the liquid in the plurality of ducts of the plurality of nozzles, while the printing media travels under the one or more print heads. It is known in the art of inkjet print heads that it is possible to infer the functioning state of a nozzle by performing an actuation of the electro-mechanical transducers a nozzle to generate a pressure wave in the liquid in the ducts, and subsequently sensing the residual pressure wave generated by said actuation in the liquid in the duct of the nozzle. This capability is utilized by the method of the present invention to sense whether a pressure wave appears while the printing media travels under the one or more print heads of the inkjet printer of the present invention. From this sensed pressure wave, the method of the present invention is able to detect the pressure wave induced by the physical impact of deformed media against the print heads. In order to perform this step accurately, it is preferable that the inkjet printer is not printing during the sensing step, as the cross-talk from printing neighbors impairs the ability to discern the signature of a media touch from the sensed pressure wave.

Therefore, the method of the present invention comprises a step of inferring from the sensed residual pressure waves which nozzles of the plurality of nozzles enter in contact with the deformed printing media while the printing media travels under the one or more print heads.

The previous steps allow the method of the present invention to perform a step of scanning the parts of the image printed by the nozzles that have been determined in the previous step of inferring from the sensed residual pressure waves which nozzles of the plurality of nozzles enter in contact with the deformed printing media to have entered in contact with the deformed printing media during a subsequent printing of the inhibited printing job. In this way, the method of the present invention allows reducing the area to be scanned for printing artifacts caused by the impact of printing media containing deformation against the nozzle plate. In turn, this reduction of the area to be scanned allows a faster process, and therefore a faster determination regarding whether printing media with deformations has created a malfunction in one or more nozzles that needs to be solved (e.g. with a purging process) in order to print without artifacts.

In an embodiment, the method of the present invention comprises that the sensor for detecting printing media deformations is an imaging sensor located before the print heads in a media path.

In an embodiment, the method of the present invention comprises that the sensor for detecting printing media deformations is a first print head in the media path of the one or more print heads in the inkjet printing device. This embodiment allows using the first print head in the media path as a sensor for detecting printing media deformations, thereby reducing the complexity of the inkjet printer. Said first print head is commonly a print head for primer that is placed before the color print heads in the media path. Further, provided that the coverage needed for primer is usually low, customarily between 20% and 60%, it is possible to schedule the jetting of primer onto the recoding medium such that the primer printhead 20a can be used to sense a pressure wave in the liquid inside the print head caused by the recording medium impacting onto the print head in a moment in which the primer print head 20a is not ejecting liquid onto the recording medium. In this way, it becomes possible to detect with a higher accuracy whether a recording medium contains deformations which may result in damage to the print heads.

In an embodiment, the inkjet printer of the present invention comprises a light beam emitter and a light beam detector in opposite sides of a printed media path, and the sensor for detecting printing media deformations is based on detecting a broken light beam between the light beam emitter and the light beam detector. In this embodiment, a light beam emitter and a light beam detector are placed in opposite sides of a printed media path such in the page width direction. In this way, deformations in the recording medium interrupt the flow of light between emitter and detector, allowing the combination to act as the sensor for detecting media deformations of the inkjet printer of the present invention.

In an embodiment, the method of the present invention further comprises re-arranging a queue of printing jobs such that the printing job to be printed in the media containing deformations maintains its position in the queue if printing is inhibited in the previous step of inhibiting printing as a result of media deformation having been detected. Said process of re-arranging the queue of printing jobs allows continuing the printing of a particular print job while avoiding missing prints due to the appearance of deformed media.

In an embodiment, the step of sensing a pressure wave is performed while none of the one or more print heads ejects liquid while a pressure wave in the liquid in the plurality of ducts of the plurality of nozzles of that one print head is being sensed. This embodiment id advantegous because it avoid the complications to sense a pressure wave in a nozzle of a print head while any other nozzle of that very same print head is printing, due to cross-talk effects.

In an embodiment, the inkjet printer of the present invention comprises sensor 10 for detecting media deformations as well as primer print head 20a. Primer print head 20a can be simultaneously used to sensor 10 for detercting media deformations. In this way, sensor 10 can be used with less stringent thresholds such that recording medium with small deformations passes through, as it is known that subsequently it can be detected by primer print head 20a.

### BRIEF DESCRIPTION OF THE DRAWINGS

Embodiment examples of the invention will now be described in conjunction with the drawings, wherein:
Fig. 1 is a perspective view of an embodiment of the inkjet printing apparatus of the present invention.
Fig. 2 is a perspective view of another embodiment of the inkjet printing apparatus of the present invention.

The accompanying drawings are included to provide a further understanding of the present invention and are incorporated in and constitute a part of this specification. The drawings illustrate particular embodiments of the invention and together with the description serve to explain the principles of the invention. Other embodiments of the invention and many of the attendant advantages of the invention will be readily appreciated as they become better understood with reference to the following detailed description.

It will be appreciated that common and/or well understood elements that may be useful or necessary in a commercially feasible embodiment are not necessarily depicted in order to facilitate a more abstracted view of the embodiments. The elements of the drawings are not necessarily illustrated to scale relative to each other. It will further be appreciated that certain actions and/or steps in an embodiment of a method may be described or depicted in a particular order of occurrences while those skilled in the art will understand that such specificity with respect to sequence is not actually required. It will also be understood that the terms and expressions used in the present specification have the ordinary meaning as is accorded to such terms and expressions with respect to their corresponding respective areas of inquiry and study, except where specific meanings have otherwise been set forth herein.

### DETAILED DESCRIPTION OF THE DRAWINGS

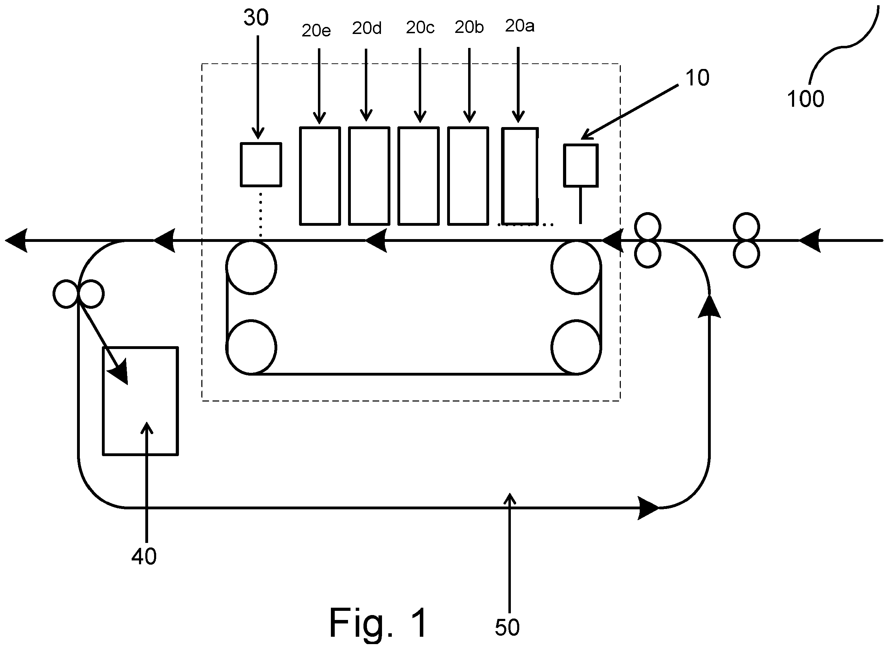

FIG. 1 shows an ink jet printer 100. The ink jet printer 100 comprises a duplex sheet transport mechanism 50 onto which a printing media is transported through a media path. While the printing media traverses the media path of the inkjet printer 100 it first encounters the touch sensor 10 for detecting deformations in the printing media. A person of skill in the art would readily understand that a plurality of sensors can perform this action, such as imaging sensors, or sensors based on detecting the deformations in the media interruption a light beam travelling froma light beam emitter to a light beam detector. Sensor 10 detects whether the printing media contains deformations severe enough to provoke a physical impact between said printing medium and the nozzles of the print heads 20a, 20b, 20c, 20d, 20e which are placed after the sensor 100 in the media path. Print heads 20a, 20b, 20c, 20d and 20e are usually dedicated to ejecting different liquids onto the printing medium such as primer, black, white, and/or CMYK inks. Usullay, the first print head in the media path 20a is dedicated to the ejection of primer. As mentioned above, if the sensor 10 detects such deformations, the inkjet printer 100 inhibits printing and uses print heads 20a, 20b, 20c, 20d, and 20e to detect, using the pressure waves that a physical impact of the printing medium may cause, which nozzles receive a physical impact from the printing media containing deformations. If no deformations are detected, printing is not inhibited and 20a, 20b, 20c, 20d, and 20e eject a liquid onto the printing media. Afterwards, scanner 30 scans the printing media in order to determine whether the printed image contains image artifacts and, if needed, rejects the printed job, and sends it to the rejection tray 40.

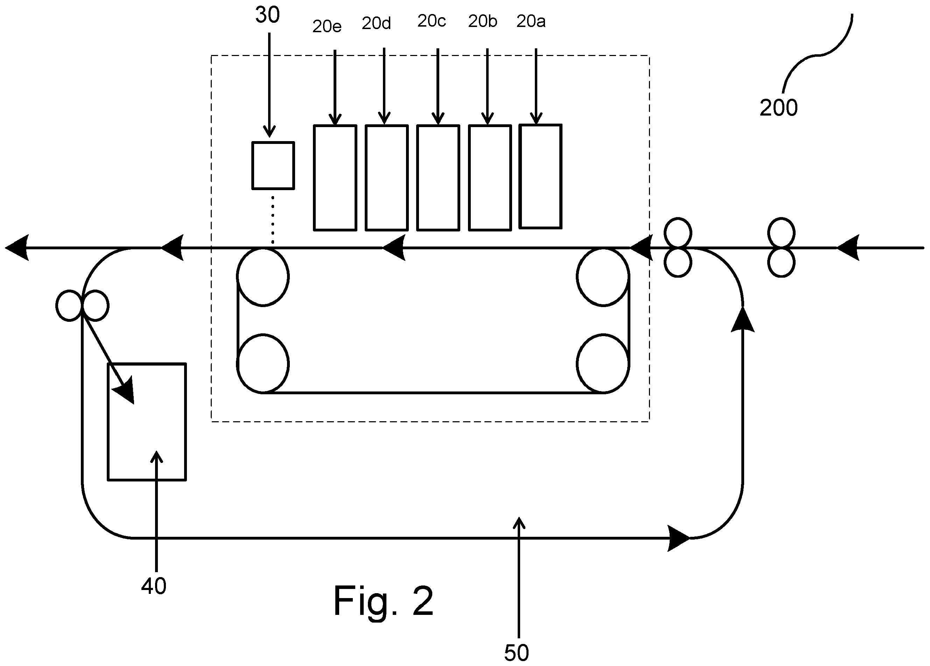

FIG. 2 shows an ink jet printer 200. The ink jet printer 200 comprises a duplex sheet transport mechanism 50 onto which a printing media is transported through a media path. In this embodiment, the inkjet printer of the present invention does not comprise a touch sensor for determining whether the printing media contains relevant deformation. In this case while the printing media traverses the media path of the inkjet printer 200 it first encounters the first print head 20a. This first print head is typically used for jetting primer onto the printing medium. Alternatively, said first print head 20a can be used for detecting deformations in the printing media. Therefore, print head 20a detects whether the printing media contains deformations severe enough to provoke a physical impact between said printing medium and the nozzles of the print heads 20b, 20c, 20d, and 20e which are placed after print head 20a in the media path. Print head 20a performs this step by analyzing the pressure wave caused by a physical touch of the printing media containing deformations against print head 20a. As mentioned above, if the print head 20a detects such deformations, it inhibits printing and uses print heads 20b, 20c, 20d, and 20e to detect, using the pressure waves that a physical impact of the printing medium may cause, which nozzles receive a physical impact from the printing media containing deformations. If no deformations are detected, printing is not inhibited and 20b, 20c, 20d,a dn 20e eject a liquid onto the printing media. Afterwards, scanner 30 scans the printing media in order to determine whether the printed image contains image artifacts and, if needed, rejects the printed job, and sends it to the rejection tray 40.

The invention also relates to an apparatus, namely an inkjet printer comprising one or more print heads each print head comprising a plurality of nozzles, a sensor for detecting printing media deformations located such that printing media travels under said sensor before travelling under the one or more print heads, and a scanner located such that printing media travels under said scanner after travelling under the one or more print heads, wherein the print head and the recording medium are arranged to be moved relative to one another in a transport direction perpendicular to a page width direction, and further comprising control means configured to apply the method according to any of the described embodiments of the present invention.

The invention also relates to a computer-program product embodied on a non-transitory computer readable medium and configured to execute any of the methods of the different embodiments according to the invention when executed on a processor.

The various blocks and modules described in connection with the disclosure herein may be implemented or performed with a general-purpose processor, a digital signal processor (DSP), an application specific integrated circuit (ASIC), a field programmable gate array (FPGA) or other components, or any combination designed to perform the functions described in this disclosure. A general-purpose processor may be a microprocessor, but in the alternative, the processor may be any conventional processor, controller, microcontroller, or state machine.

The steps of a method or algorithm described in connection with the disclosure herein may be embodied directly in hardware, in a software/firmware module executed by a processor, or in a combination thereof. A software/firmware module may reside in RAM memory, flash memory, ROM memory, EPROM memory, EEPROM memory, phase change memory (PCM), registers, hard disk, a removable disk, a CD-ROM, or any other form of storage medium known.

The invention also relates to a non-transitory data carrier having stored thereon the computer-program product according to any of the embodiments of the invention.

The previous description of the disclosure is provided to enable any person skilled in the art to make or use the disclosure. Different modifications to the disclosure will be readily apparent to those skilled in the art, and the generic principles defined herein may be applied to other variations without departing from the scope of the disclosure. As a consequence, the disclosure is not intended to be limited to the examples and designs described herein, but it is to be accorded the widest scope consistent with the principles and novel features disclosed herein.

## Claims

1. A method of controlling an inkjet printing device comprising one or more print heads each print head (20a, 20b, 20c, 20d, 20e) comprising a plurality of nozzles, a sensor for detecting printing media deformations located such that printing media travels under said sensor before travelling under the one or more print heads, and a scanner (30) located such that printing media travels under said scanner after travelling under the one or more print heads, the the method comprising the steps of:
a) detecting media deformations using the sensor;
b) if deformations are detected in the printing media, inhibiting printing;
c) if printing is inhibited in step b), sensing a pressure wave in the liquid in the plurality of ducts (16) of the plurality of nozzles of one or more of the print heads (20a, 20b, 20c, 20d, 20e), while the printing media travels under the one or more print heads resulting in a plurality of sensed pressure waves; and
d) inferring from the plurality of sensed pressure waves which nozzles of the plurality of nozzles enter in contact with the deformed printing media while the printing media travels under the one or more print heads; and
e) scanning the parts of the image printed by the nozzles that have been determined in step d) to have entered in contact with the deformed printing media during a subsequent printing of the inhibited printing job.

2. The method of claim 1, wherein the sensor for detecting printing media deformations is an imaging sensor located before the print heads in a media path.

3. The method of claim 1, wherein the sensor for detecting printing media deformations is a first print head (20a) in the media path of the one or more print heads in the inkjet printing device.

4. The method of claim 1, wherein the inkjet printer comprises a light beam emitter and a light beam detector in opposite sides of a printed media path, and wherein the sensor for detecting printing media deformations is based on detecting a broken light beam between the light beam emitter and the light beam detector.

5. The method of any preceding claim, further comprising re-arranging a queue of printing jobs such that the printing job to be printed in the media containing deformations maintains its position in the queue if printing is inhibited in step b).

6. The method of any preceding claim, wherein step c) is performed while none of the one or more print heads (20a, 20b, 20c, 20d, 20e) ejects liquid while a pressure wave in the liquid in the plurality of ducts (16) of the plurality of nozzles of that one print head (20a, 20b, 20c, 20d, 20e) is being sensed.

7. An inkjet printer (100) comprising one or more print heads (20a, 20b, 20c, 20d, 20e) each print head comprising a plurality of nozzles, a sensor for detecting printing media deformations located such that printing media travels under said sensor before travelling under the one or more print heads, and a scanner (30) located such that printing media travels under said scanner after travelling under the one or more print heads, wherein the print head and the recording medium are arranged to be moved relative to one another in a transport direction perpendicular to a page width direction, and further comprising control means configured to apply the method according to any of the claims 1 to 6.

## Patentansprüche

1. Ein Verfahren zur Steuerung einer Tintenstrahldruckvorrichtung, die einen oder mehrere Druckköpfe hat, wobei jeder Druckkopf (20a, 20b, 20c, 20d, 20e) mehrere Düsen, einen Sensor zur Detektion von Deformationen von Druckmedien, der so positioniert ist, dass Druckmedien unter dem Sensor hindurchlaufen, bevor sie unter dem einen oder den mehreren Druckköpfen hindurchlaufen, und einen Scanner (30) aufweist, der so angeordnet ist, dass Druckmedien unter dem Scanner hindurchlaufen, nachdem sie unter dem einen oder den mehreren Druckköpfen hindurchgelaufen sind, wobei das Verfahren die folgenden Schritte umfasst:
a) detektieren von Deformationen von Medien mit Hilfe des Sensors;
b) wenn Deformationen in den Druckmedien detektiert wurden, blockieren des Druckens;
c) wenn das Drucken in Schritt b) blockiert wurde, erfassen einer Druckwelle in der Flüssigkeit in den mehreren Leitungen (16) der mehreren Düsen des einen oder der mehreren Druckköpfe (20a, 20b, 20c, 20d, 20e), während das Druckmedium unter dem einen oder den mehreren Druckköpfen hindurchläuft, was zu mehreren erfassten Druckwellen führt; und
d) erschließen aus der Mehrzahl der erfassten Druckwellen, welche Düsen unter der Vielzahl der Düsen mit dem deformierten Druckmedium in Kontakt kommen, während das Druckmedium unter dem einen oder den mehreren Druckköpfen hindurchläuft; und
e) scannen derjenigen Teile des Bildes, die mit den Düsen gedruckt wurden, für die in Schritt d) festgestellt wurde, dass sie während eines nachfolgenden Druckens des blockierten Druckauftrags mit dem deformierten Druckmedium in Kontakt gekommen sind.

2. Das Verfahren nach Anspruch 1, bei dem das Sensor zur Detektion der Deformationen der Druckmedien ein bildgebender Sensor ist, der in einem Medienpfad vor den Druckköpfen angeordnet ist.

3. Das Verfahren nach Anspruch 1, bei dem der Sensor zur Detektion der Deformationen der Druckmedien ein erster Druckkopf (20a) in dem Medienpfad des einen oder der mehreren Druckköpfe in der Tintenstrahldruckvorrichtung ist.

4. Das Verfahren nach Anspruch 1, bei dem der Tintenstrahldrucker eine Lichtstrahlquelle und einen Lichtstrahldetektor auf einander gegenüberliegenden Seiten eines Medienpfades für gedruckte Medien aufweist und bei dem der Sensor zur Detektion von Deformationen der Druckmedien auf der Detektion eines unterbrochenen Lichtstrahls zwischen der Lichtstrahlquelle und dem Lichtstrahldetektor basiert.

5. Das Verfahren nach einem der vorstehenden Ansprüche, weiterhin umfassend eine Neuordnung einer Schlange von Druckaufträgen derart, dass der Druckauftrag, der in den Medien zu drucken ist, die Deformationen enthalten, seine Position in der Schlange behält, wenn das Drucken in Schritt d) blockiert wird.

6. Das Verfahren nach einem der vorstehenden Ansprüche, bei dem der Schritt c) ausgeführt wird, während keiner der ein oder mehreren Druckköpfe (20a. 20b, 20c, 20d, 20e) Flüssigkeit ausstößt, während eine Druckwelle in der Flüssigkeit in den mehreren Leitungen (16) der mehreren Düsen des einen Druckkopfes (20a, 20b, 20c, 20d, 20e) erfasst wird.

7. Ein Tintenstrahldrucker (100) mit einem oder mehreren Druckköpfen (20a. 20b, 20c, 20d, 20e), wobei jeder Druckkopf mehrere Düsen, einen Sensor zur Detektion von Deformationen der Druckmedien, der so positioniert ist, dass Druckmedien unter dem Sensor hindurchlaufen bevor sie unter dem einen oder den mehreren Druckköpfen hindurchlaufen, und einen Scanner (30) aufweist, der so angeordnet ist, dass Druckmedien unter dem Scanner hindurchlaufen, nachdem sie unter dem einen oder den mehreren Druckköpfen hindurchgelaufen sind, wobei der Druckkopf und das Aufzeichnungsmedium dazu eingerichtet sind, relativ zueinander in einer Transportrichtung rechtwinklig zu einer Seiten-Breitenrichtung bewegt zu werden, und weiterhin aufweisend eine Steuereinrichtung, die dazu konfiguriert ist, das Verfahren nach einem der Ansprüche 1 bis 6 auszuführen.

## Revendications

1. Procédé de commande d'un dispositif d'impression à jet d'encre comprenant une ou plusieurs têtes d'impression, chaque tête d'impression (20a, 20b, 20c, 20d, 20e) comprenant une pluralité de buses, un capteur pour détecter des déformations de support d'impression situé de telle manière que le support d'impression se déplace sous ledit capteur avant de se déplacer sous les unes ou plusieurs têtes d'impression, et un dispositif de balayage (30) situé de telle manière que le support d'impression se déplace sous ledit dispositif de balayage après s'être déplacé sous les une ou plusieurs têtes d'impression, le procédé comprenant les étapes de :
a) détection de déformations du support en utilisant le capteur ;
b) si des déformations sont détectées dans le support d'impression, fait d'empêcher l'impression ;
c) si l'impression est empêchée dans l'étape b), détection d'une onde de pression dans le liquide dans la pluralité de conduits (16) de la pluralité de buses d'une ou plusieurs des têtes d'impression (20a, 20b, 20c, 20d, 20e), alors que le support d'impression se déplace sous les une ou plusieurs têtes d'impression, résultant en une pluralité d'ondes de pression détectées ; et
d) déduction, à partir de la pluralité d'ondes de pression détectées, des buses parmi la pluralité de buses qui entrent en contact avec le support d'impression déformé alors que le support d'impression se déplace sous les une ou plusieurs têtes d'impression ; et
e) balayage des parties de l'image imprimée par les buses qui ont été déterminées dans l'étape d) comme étant entrées en contact avec le support d'impression déformé durant une impression suivante de la tâche d'impression empêchée.

2. Procédé selon la revendication 1, dans lequel le détecteur pour détecter des déformations de support d'impression est un capteur d'imagerie situé avant les têtes d'impression dans un trajet de support.

3. Procédé selon la revendication 1, dans lequel le détecteur pour détecter des déformations de support d'impression est une première tête d'impression (20a) dans le trajet de support des une ou plusieurs têtes d'impression dans le dispositif d'impression à jet d'encre.

4. Procédé selon la revendication 1, dans lequel l'imprimante à jet d'encre comprend un émetteur de faisceau lumineux et un détecteur de faisceau lumineux dans des côtés opposés d'un trajet de support imprimé, et dans lequel le capteur pour détecter des déformations de support d'impression est basé sur la détection d'un faisceau lumineux rompu entre l'émetteur de faisceau lumineux et le détecteur de faisceau lumineux.

5. Procédé selon une quelconque revendication précédente, comprenant en outre le ré-agencement d'une file de tâches d'impression de telle manière que la tâche d'impression devant être imprimée dans le support contenant des déformations maintient sa position dans la file si l'impression est empêchée dans l'étape b).

6. Procédé selon une quelconque revendication précédente, dans lequel l'étape c) est réalisée alors qu'aucune des une ou plusieurs têtes d'impression (20a, 20b, 20c, 20d, 20e) n'éjecte de liquide alors qu'une onde de pression dans le liquide dans la pluralité de conduits (16) de la pluralité de buses de cette tête d'impression (20a, 20b, 20c, 20d, 20e) est en cours de détection.

7. Imprimante à jet d'encre (100) comprenant une ou plusieurs têtes d'impression (20a, 20b, 20c, 20d, 20e), chaque tête d'impression comprenant une pluralité de buses, un capteur pour détecter des déformations de support d'impression situé de telle manière que le support d'impression se déplace sous ledit capteur avant de se déplacer sous les unes ou plusieurs têtes d'impression, et un dispositif de balayage (30) situé de telle manière que le support d'impression se déplace sous ledit dispositif de balayage après s'être déplacé sous les une ou plusieurs têtes d'impression, dans lequel la tête d'impression et le support d'enregistrement sont agencés pour être déplacés l'un par rapport à l'autre dans une direction de transport perpendiculaire à une direction de largeur de page, et comprenant en outre un moyen de commande configuré pour appliquer le procédé selon l'une quelconque des revendications 1 à 6.
